# EUROPEAN PATENT APPLICATION

(11) **EP 4 484 113 A1**
(43) Date of publication of application: **01.01.2025**
(21) Application number: 24184962.9
(22) Date of filing: 27.06.2024
(51) Int. Cl.: B29C 45/16, B29C 45/56, B29L 31/30, B60R 13/02

(54) **METHOD FOR PRODUCING A VEHICLE TRIM PART HAVING A VISIBLE SPECKLE OR VEINING PATTERN, VEHICLE TRIM PART WITH A VISIBLE SPECKLE OR VEINING PATTERN, DEVICE FOR SIMULTANEOUSLY PRINTING MULTIPLE LINES ON A FLAT OR CURVED SURFACE TO FORM A VEINING PATTERN AND DEVICE FOR PRINTING MULTIPLE DIFFERENT SHAPES ON A FLAT OR CURVED SURFACE TO FORM A SPECKLE PATTERN**

(30) Priority: 30.06.2023 DE 102023206199
(71) Applicant: Faurecia Innenraum Systeme GmbH, 76767 Hagenbach (DE)
(72) Inventor: CUVILLIER, Christophe, 95310 Saint-Ouen-l'Aumône (FR); BASQUIN, Guillaume, 67160 Wissembourg (FR); TRILLAT, Sebastien, 78300 Poissy (FR); PESCE, Jean-Jacques, 60510 Bresles (FR); VACHER, Kévin, 76199 Karlsruhe (DE)
(74) Representative: Pfenning, Meinig & Partner mbB

(57) **Abstract**

The present disclosure relates, inter alia, to a method for producing a vehicle trim part having a visible speckle and/or veining pattern on a visible side of the vehicle trim part visible from the outside comprising the steps of providing an injection mold with a first mold half and a second mold half, which are movable relative to one another between an open and a closed position of the injection mold, the injection mold forming a cavity between the first and the second mold half in the closed position; injecting a plastic melt into the cavity; hardening of the injected plastic melt to form the vehicle trim part; removing the vehicle trim part by opening the injection mold; wherein before the injecting of the plastic melt into the cavity plastic elements are provided and arranged on a cavity surface in such a way that, during injection and/or hardening, the plastic elements connect in a material-locking manner with the injected plastic melt and form a speckle and/or veining pattern on the visible side of the vehicle trim part.

## Description

The present disclosure relates to a method for producing a vehicle trim part having a visible speckle and/or veining pattern, a vehicle trim part with a visible speckle and/or veining pattern, a device for simultaneously printing multiple lines on a flat or curved surface to form a veining pattern and a device for printing multiple different shapes on a flat or curved surface to form a speckle pattern.

It may be desirable to provide manufactured parts, for example vehicle trim parts, in particular for automotive vehicles, with a speckle or veining pattern. This can, for example, make the choice of recycled or sustainable materials in the manufacture of the parts visible to the customer.

Usually, in order to provide a vehicle trim part with a desired design, an in-mold decoration (IMD) or in-mold decoration label (IML) process is used, whereby a foil containing the design is placed in an injection mold and the design is then transferred to an injection-molded part with (IML) or without (IMD) the foil. However, these technologies have the disadvantage of high costs and, in particular, lack of sustainability. Other processes that, in contrast, use tools for direct printing, such as fused filament fabrication or injection molding, may also be cost-intensive. On the other hand, processes that already include a raw material premixed according to the desired pattern regularly show an at least aesthetically unsatisfactory result in the finished part.

It is therefore an objective of this disclosure to provide an alternative and more cost-effective method for producing a vehicle trim part having a visible speckle and/or veining pattern, to provide an alternative and more cost-effective vehicle trim part with a visible speckle and/or veining pattern, to provide an alternative and more cost-effective device for simultaneously printing multiple lines on a flat or curved surface to form a veining pattern and to provide an alternative and more cost-effective device for printing multiple different shapes on a flat or curved surface to form a speckle pattern.

This object is solved by a respective method, a respective vehicle trim part and two respective different devices according to the independent claims. Further embodiments of the invention are shown in the dependent claims, the figures and the following description.

The proposed method for producing a vehicle trim part having a visible speckle and/or veining pattern on a visible side of the vehicle trim part visible from the outside comprises the steps of
- Providing an injection mold with a first mold half and a second mold half, which are movable relative to one another between an open and a closed position of the injection mold, the injection mold forming a cavity between the first and the second mold half in the closed position;
- Injecting a plastic melt into the cavity;
- Hardening of the injected plastic melt to form the vehicle trim part;
- Removing the vehicle trim part by opening the injection mold;
wherein before the injecting of the plastic melt into the cavity
- plastic elements are provided and arranged on a cavity surface in such a way that, during injection and/or hardening, the plastic elements connect in a material-locking manner with the injected plastic melt and form a speckle and/or veining pattern on the visible side of the vehicle trim part.

By applying the desired pattern directly to the cavity surface, the corresponding vehicle trim part can be produced in a particularly cost-efficient manner.

The vehicle trim part can be a vehicle interior trim part or a vehicle exterior trim part. The vehicle trim part can be a decorative trim or panel part. In the finished vehicle trim part, the plastic elements and the material of the injected plastic melt are joined together as one piece by their material-locking connection.

In the present case, by a vehicle trim part having a visible side visible from the outside is meant a vehicle trim part whose visible side can be seen by a user of the vehicle without destruction or removal of the vehicle trim part when used as intended, for example in a passenger compartment. Depending on the transparency or translucency of the vehicle trim part, its visible side may include only the visible outer surface of the vehicle trim part or additionally any visible interior of the vehicle trim part as well. For example, if a transparent or translucent material is used for the injected plastic melt, the visible speckle and/or veining pattern may include a projection of the plastic elements from the interior of the vehicle trim part in the direction of the visible side. Accordingly, the plastic elements may be arranged on an inner side of the vehicle trim part facing substantially in the opposite direction to the visible side and/or on an inner side of the vehicle trim part facing substantially in the same direction as the visible side.

By speckle pattern is meant in the present case a pattern which, for example, forms an at least apparently random distribution of spot-like speckle elements on the visible side of the vehicle trim part. The speckle elements can form round, for example circular, or angular areas visually delimited from the surrounding material. Such speckle patterns are regularly associated with the use of a sustainable material or mix of materials, or recyclable or recycled materials.

By veining pattern is meant in the present case a pattern which, for example, forms on the visible side of the vehicle trim part an at least apparently random distribution of curved, partly closed line elements which run parallel at least in sections and may, for example, be reminiscent of the contour lines of a mountain profile. Such patterns are found, for example, in Cipollino marble or form when a color blend is mixed. Such veining patterns are regularly associated with the use of a sustainable material or mix of materials, or recyclable or recycled materials.

The cavity surface on which the plastic elements are arranged can substantially comprise a surface of the first mold half and/or a surface of the second mold half facing the vehicle trim part to be produced. The respective surface of the first mold half may be a surface substantially facing in the opposite direction to the visible side. The respective surface of second mold half may by a surface substantially facing in the same direction as the visible side of the vehicle trim part to be produced. Accordingly, in the resulting vehicle trim part, the plastic elements may be arranged on an inner side of the vehicle trim part facing substantially in the opposite direction to the visible side and/or - in particular when a transparent or translucent material is used for the injected plastic melt - on an inner side of the vehicle trim part facing substantially in the same direction as the visible side. The plastic elements and the injected plastic melt may be arranged substantially directly adjacent, i.e. without any intermediate layer or substance, to the cavity surface. The plastic elements may be provided and arranged on the cavity surface while the injection mold is in its open position.

The plastic elements may form a macroscopic speckle and/or veining pattern on the visible side of the vehicle trim part, which pattern is for example visible to the naked eye within usual distances in a passenger compartment. In this example, usual distances may comprise a distance range between 30 cm and 3 m. In particular, a minimum visible extent of individual geometric elements of the speckle and/or veining pattern, for example an average diameter of individual speckle spots or an average line width of individual veining lines, may be on average at least 0.1 mm, at least 0.5 mm or at least 2 mm and on average at most 5 mm, at most 10 mm or at most 15 mm. The pattern may differ, in particular visibly differ, in color from the injected plastic melt. The pattern can be single or multicolored. Single pattern elements may be provided by single plastic elements or by multiple adjacent plastic elements. A combination of a speckle and a veining pattern, or different areas each with a speckle or a veining pattern, may be provided on the vehicle trim part.

The plastic elements arranged on the cavity surface may be heated before injecting the plastic melt into the cavity. Heating of the plastic elements may be provided by directly heating the plastic elements and/or by heating the first mold half and/or the mold cavity, for example by hot air blowing, thermal resistance heating, induction heating or UV lamp heating. Heating, in particular heating of the cavity surface, may be provided before, during and/or after providing and arranging the plastic elements on the cavity surface. Additionally or alternatively, the plastic elements arranged on the cavity surface may be pressed against the cavity surface by means of a pressing device, in particular a hot pressing device. The pressing device may be provided with a non-stick coating, in particular on its side which faces the cavity surface during pressing, which coating is preventing sticking of the plastic elements to the pressing device. Heating and/or pressing of the plastic elements may result in a deformation of the plastic elements in such a way that their resulting extension depth into the vehicle trim part measured along a surface normal of the vehicle trim part is 100 %, not more than 80 %, not more than 50 % or not more than 30 %. The deformation can result in a decrease in the extension of the plastic elements along the surface normal to as low as 80 %, 50 % or 30 % of their initial size. Additionally or alternatively, pressing of the plastic elements may provide a homogeneous and in particular a flat surface of the plastic elements facing towards the pressing device. Additionally or alternatively, heating and/or pressing of the plastic elements may result in enhanced connection or sticking of the plastic elements to the cavity surface, in particular during the injecting of the plastic melt into the cavity and/or the hardening of the injected plastic melt. Additionally or alternatively, heating and/or pressing of the plastic elements may provide deformation and/or at least partial overlapping and/or blending of adjacent pattern elements. Additionally or alternatively, heating and/or pressing may provide connection, in particular in a material-locking manner, of adjacent plastic elements. For heating and/or pressing of the plastic elements the plastic elements and/or the cavity surface and/or the pressing device may be brought to a temperature of at least 60 °C, at least 100 °C, at least 140 °C or at least 150 °C, in particular depending on the glass-transition or melting temperature of the plastic elements.

The plastic elements may comprise or consist of a thermoplastic, in particular a recycled thermoplastic. For example, the plastic elements may comprise or consist of polypropylene or recycled polypropylene. Alternatively or additionally, the plastic elements may comprise or consist of polylactic acid and/or recycled polylactic acid, but also polyethylene terephthalate, acrylonitrile butadiene styrene, acrylonitrile styrene acrylate and/or their recycled counterparts. The entirety of the plastic elements and/or single plastic elements may be single, bi- or multicolored, whereby pearlescent or glossy element surfaces may be provided as well. The injected plastic melt may comprise or consist of a thermoplastic or a recycled thermoplastic. The injected plastic melt may comprise or consist of polypropylene, poly(methyl methacrylate), polycarbonate, polystyrene and/or acrylonitrile butadiene styrene. The injected plastic melt may at least partially consist of a transparent or translucent material. In particular, the material of the plastic elements and the material of the injected plastic melt should be selected to be compatible with each other so that a material bond is formed between the plastic elements and the injected plastic melt during injection and/or hardening. The plastic elements and/or the injected plastic melt can consist of a mono-material, i.e. consist of a single pure material. Furthermore, additives, in particular binding agents, may be added to or contained in the plastic elements and/or the injected plastic melt, so that a connection between individual plastic elements and/or between the plastic elements and the injected plastic melt is enhanced. Besides, the additives may also enhance adhesion between the plastic elements and the cavity surface.

The plastic elements may comprise or consist of solid plastic particles, plastic pellets, plastic powder, plastic filaments and the like. The plastic elements may comprise a pre-formed design pattern. Depending on the step of providing and arranging the plastic elements on the cavity surface, a raw plastic material may be used comprising or consisting of solid plastic particles, plastic pellets, plastic powder, plastic filaments and the like, in addition to molten plastic. Providing and arranging the plastic elements on the cavity surface may include manual or machine application, for example by means of a dispensing device, spraying, sieving, filtering, brushing, stamping, and in particular pellets extrusion or fused filament fabrication. Along the surface normal of the cavity surface facing the vehicle trim part to be produced, the plastic elements can be arranged essentially in a single layer or at least partially stacked on top of each other. The plastic elements and/or the plastic raw material can be substantially flat or expanded in all three spatial directions. Depending on the process, the desired pattern, for example with regard to the distribution and arrangement of the individual pattern elements, may be partially randomized, but at least predetermined with respect to the mean extent and density of the plastic elements visible on the visible side of the vehicle trim part to be produced. Alternatively, the desired pattern may be as well predetermined with respect to the distribution and arrangement of the individual pattern elements.

As described herein, the elements provided and arranged on the cavity surface are plastic elements at least partially made of plastic. Additionally or alternatively those elements may comprise or consist of other materials, e.g. metal and/or wood. In particular material mixes or composite materials comprising plastic and metal or wood can be used for the plastic elements. The respective elements can alternatively connect in a positive-locking manner with the injected plastic melt, in particular if the respective elements are porous elements.

The plastic elements may be provided and arranged on the first mold half by at least one nozzle, in particular by means of pellets extrusion for example using a hot-runner, or fused filament fabrication of raw plastic material. In case of pellets extrusion the raw plastic material may be plastic pellets and in case of fused filament fabrication the raw plastic material may be a plastic filament. In case of pellets extrusion using a hot-runner, a pipe conveying molten raw plastic material to the nozzle and/or the nozzle may comprise a thermally insulating coating in order to maintain a desired temperature of the raw material plastic melt. The coating may be provided on pipe and/or nozzle surfaces in contact with the raw material plastic melt. For arrangement of the plastic elements using at least one nozzle, the at least one nozzle can be moved along the cavity surface. Alternatively or additionally, however, the cavity surface can also be moved relative to the at least one nozzle. In order to provide different shapes of single pattern elements, differently shaped nozzle cross-sections may be used. Corresponding nozzles are generally known. They are characterized by a nozzle inlet for receiving and a nozzle outlet for discharging a material, with the discharge taking place essentially along a main nozzle axis. The cross-section of the discharged material is essentially predetermined by the nozzle cross-section defining a shape substantially perpendicular to the main nozzle axis. In the following, the terms main nozzle axis and nozzle cross-section are used correspondingly.

According to one embodiment of the method, in which the plastic elements are provided and arranged by means of at least one nozzle, multiple plastic elements may be provided and arranged simultaneously on the cavity surface by using a plurality of nozzles arranged adjacent to each other. This may be particularly suited for creating a veining pattern. The nozzles can be arranged essentially in a plane, in particular in a plane parallel to the cavity surface. The nozzles can be arranged such that their main axes are essentially parallel. Depending on the pattern, the nozzles can be arranged essentially linearly or in a package that is as compact as possible in all directions. Depending on the pattern, the nozzles can be individually or jointly moved along the side of the cavity surface and/or rotated about a main nozzle axis and/or fed with the raw plastic material and/or provided with different nozzle cross-sections, thereby providing, for example, different line distances of individual adjacent lines, waved lines, dashed lines and different line colors or different line shapes, respectively.

According to one alternative embodiment of the method, in which the plastic elements are provided and arranged by means of at least one nozzle, a cartridge with differently shaped through holes may be provided and arranged between the nozzle and the cavity surface. The through holes may be selectively brought into alignment with the nozzle along a main nozzle axis in such a way that plastic elements of different shapes are provided and arranged on the cavity surface in accordance with the through holes. This may be particularly suited for creating a speckle pattern with numerous differently shaped speckles of a predetermined shape.

As an alternative to using the at least one nozzle to directly provide and arrange the plastic elements on the cavity surface, a pattern of plastic elements may be pre-formed by the at least one nozzle on any working surface and then transferred to the cavity surface.

With regard to further features of the process steps just described using multiple nozzles or a cartridge, reference is made to the devices described further below and vice versa. These are not limited thereto, but are particularly well suited for carrying out the corresponding process steps in the production of a vehicle trim part with a speckle and/or veining pattern.

Injecting the plastic melt may be provided by one or more injection channels, which may be arranged in the first mold half and/or the second mold half. Injection of the plastic melt may be substantially provided along the direction of gravitational acceleration or perpendicular thereto, depending on the arrangement of an injection assembly. Usually, during the step of providing and arranging the plastic elements on the cavity surface, the cavity surface will be arranged substantially horizontal, i.e. in a plane perpendicular to the direction of gravitational acceleration. Therefore, when plastic elements are provided on the first and the second mold half and/or when injecting the plastic melt is provided in a direction perpendicular to the direction of gravitational acceleration, the method may include the step of rotating the first mold half and/or the second mold half and/or the cavity at least before injecting the plastic melt. It may be advantageous if the optional heating and/or pressing step described above is carried out beforehand. Hardening of the injected plastic melt may be provided by cooling, in particular passive or active cooling of the first and second mold half, in particular at the two mold half surfaces facing the vehicle trim part to be produced, depending on the material of injected plastic melt.

Furthermore, a vehicle trim part with a visible speckle and/or veining pattern is proposed. The vehicle trim part has a visible side visible from the outside and comprises plastic elements which are arranged in an injection-molded plastic and are connected to the latter in a material-locking manner in such a way that a visible speckled and/or veining pattern is formed on the visible side.

Since plastic elements forming the pattern are arranged in the injection-molded plastic and connected to it in a material-locking manner, more cost-efficient processes can in principle be used for their production than, for example, the IML and IMD processes described above.

In particular, the vehicle trim part may be a vehicle trim part producible or produced by a method as described above.

The plastic elements may comprise or consist of a thermoplastic, in particular a recycled thermoplastic. For example, the plastic elements may comprise or consist of polypropylene or recycled polypropylene. Alternatively or additionally, the plastic elements may comprise or consist of polylactic acid and/or recycled polylactic acid, but also polyethylene terephthalate, acrylonitrile butadiene styrene, acrylonitrile styrene acrylate and/or their recycled counterparts. In particular, the plastic elements may consist of a mono-material. The entirety of the plastic elements and/or single plastic elements may be single, bi- or multicolored, whereby pearlescent or glossy element surfaces may be provided as well. The injection-molded plastic may comprise or consist of a thermoplastic or a recycled thermoplastic. The injection-molded plastic may comprise or consist of polypropylene, poly(methyl methacrylate), polycarbonate, polystyrene and/or acrylonitrile butadiene styrene. In particular, the injection-molded plastic may consist of a mono-material. The injection-molded plastic may at least partially consist of a transparent or translucent material.

An extension depth of the plastic elements into the vehicle trim part measured along a surface normal of the vehicle trim part may be 100 %, not more than 80 %, not more than 50 % or not more than 30 %. In addition or alternatively, the extension depth may be not less than 1 %, not less than 5 %, not less than 10 % or not less than 20 %. An average extension depth of the plastic elements may be 30 %.

The vehicle trim part may be a vehicle interior trim part or a vehicle exterior trim part. The vehicle trim part may be a decorative trim or panel part, in particular as part of a door panel, a center console, a front console or a roof panel or the like. The vehicle trim part may be a trim part with a substantially flat or curved visible side.

Furthermore, a device for simultaneously printing multiple lines on a flat or curved surface to form a veining pattern is proposed. The device comprises a plurality of nozzles configured to provide and arrange plastic elements on the surface. The nozzles are arranged adjacent to one another and individually or jointly movable along the surface and/or rotatable about a main nozzle axis and/or feedable with the raw plastic material and/or provided with different nozzle cross-sections.

As the device includes multiple nozzles that can print simultaneously, the overall-costs of a printing process performed with the device can be reduced.

The nozzles may be configured for printing by means of pellets extrusion, e.g. using a hot-runner, or fused filament fabrication of raw plastic material. The nozzles may be arranged in a common movable printing head for feeding and controlling the nozzles. The printing head may be movable in all six degrees of freedom. The nozzles can be movably arranged in the printing head in such a way that a movement of the printing head results in a global movement of all nozzles and the movement of individual nozzles results in their movement relative to each other. The nozzles can be essentially arranged in a plane, in particular in a plane parallel to the surface. The nozzles can be arranged such that their main axes are essentially parallel. The nozzles can be arranged essentially linearly or in a package that is as compact as possible in all directions. A shortest distance, between two adjacent nozzles, in particular perpendicular to the main nozzle axis, may not be greater than 0 mm, 0.1 mm, 1 mm or 10 mm.

Finally, a device for printing multiple different shapes on a flat or curved surface to form a speckle pattern is proposed. The device comprises a nozzle configured to provide and arrange plastic elements on the surface, in particular by means of pellets extrusion or fused filament fabrication of raw plastic material, and comprises a cartridge with differently shaped through holes arranged between the nozzle and the surface. The through holes are selectively alignable with the nozzle along a main nozzle axis.

As the device includes a cartridge arranged between the nozzle and the surface, wherein differently shaped through holes are alignable with the main nozzle axis to print different shapes, the overall-costs of a printing process performed with the device can be reduced.

The through holes may be distributed radially around an axis of rotation of the cartridge, wherein the cartridge is rotatably mounted about the axis of rotation for alignment of the through holes with the main nozzle axis. The axis of rotation of the cartridge and the main nozzle axis can extend parallel and spaced apart from each other. The shapes of the through holes may be defined by a cross-section of the through holes substantially perpendicular to the axis of rotation and/or substantially perpendicular to the main nozzle axis. The different shapes of the through holes may be substantially circular and/or angular. The cross-section of at least one or all the through holes at an end of the trough hole facing the nozzle may have a largest diameter substantially equal to and/or smaller than a largest diameter of the nozzle cross-section at a nozzle end facing the cartridge. The cross-section of at least one or all the through holes may be tapered towards an end of the through-hole facing away from the nozzle. The cartridge may be arranged adjacent, in particular directly adjacent, to the nozzle. A minimum distance between the cartridge and the nozzle, the distance being measured along the main nozzle axis, may not exceed 0 mm, 0.1 mm or 0.5 mm. The cartridge can be formed as a substantially flat disc, wherein optionally the axis of rotation corresponds to the principal axis of inertia, which runs along the surface normal of the disk base surface.

In particular, the device for simultaneously printing multiple lines on a flat or curved surface to form a veining pattern and the device for printing multiple different shapes on a flat or curved surface to form a speckle pattern are suited for providing a speckle and/or veining pattern on a vehicle trim part or to be used with the method described above.

The presently disclosed methods, products and devices relate to a speckle and/ or veining pattern. However, it is apparent to the person skilled in the art that in principle also other patterns are conceivable.

Several embodiments have been disclosed herein. From the following detailed description, which shows and describes exemplary embodiments of the invention, further embodiments of the present invention will become apparent to those skilled in the art. Accordingly, the drawings and the detailed description are to be regarded as exemplary and not restrictive. Recurring features are marked with the same reference signs in the description of the figures, in which:
- Fig. 1: shows the step of providing an injection mold according to an embodiment of a method for producing a vehicle interior trim part having a visible speckle and/or veining pattern,
- Fig. 2: shows the step of providing and arranging plastic elements according to the method,
- Fig. 3: shows the step of injecting a plastic melt according to the method,
- Fig. 4: shows the step of removing the vehicle trim part according to the method,
- Fig. 5: shows an exemplary vehicle trim part with a speckle pattern,
- Fig. 6: shows an exemplary vehicle trim part with a veining pattern,
- Fig. 7: shows a first alternative embodiment of the vehicle trim part produced according to a first alternative embodiment of the method,
- Fig. 8: shows a second alternative embodiment of the vehicle trim part produced according to a second alternative embodiment of the method,
- Fig. 9: shows the step of heating and pressing the plastic elements according to a third alternative embodiment of the method,
- Fig. 10: shows a first embodiment of a device for simultaneously printing multiple lines on a flat or curved surface to form a veining pattern,
- Fig. 11: shows a veining pattern provided on a surface by the device of Fig. 10,
- Fig. 12: shows a second embodiment of a device for simultaneously printing multiple lines on a flat or curved surface to form a veining pattern,
- Fig. 13: shows the device of Fig. 12 with a rotating nozzle,
- Fig. 14: shows a first embodiment of a device for printing multiple different shapes on a flat or curved surface to form a speckle pattern,
- Fig. 15: shows a speckle pattern provided on a surface by the device of Fig. 14,
- Fig. 16: shows the cartridge of the device of Fig. 14, and
- Fig. 17: shows the cartridge of a second embodiment of a device for printing multiple different shapes on a flat or curved surface to form a speckle pattern.

In the following, reference is made to specific figures only when essential differences between the exemplary embodiments are explained.

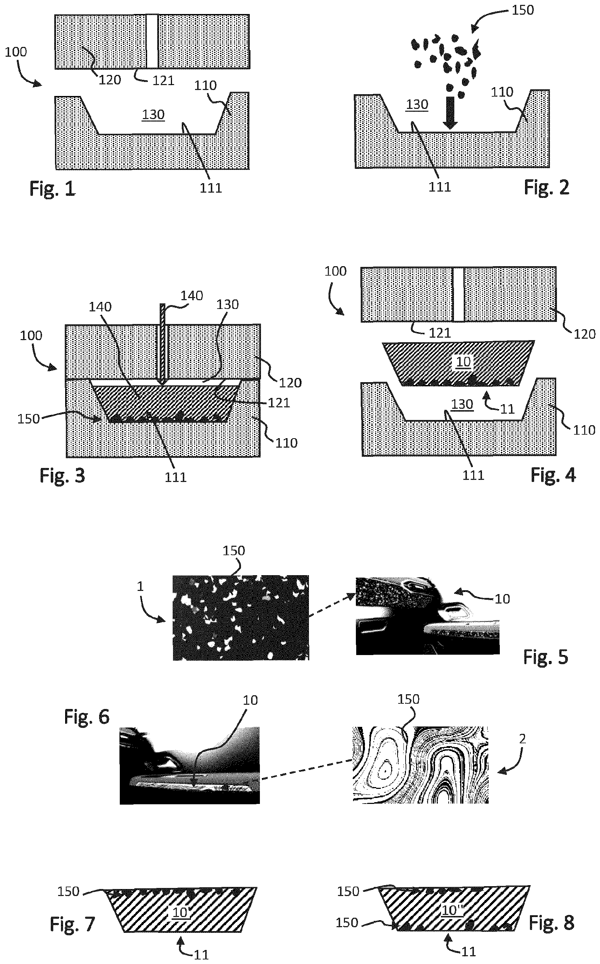

Figures 1 to 4 schematically show an embodiment of a method for producing a vehicle trim part 10; 10'; 10" having a visible speckle and/or veining pattern 1; 2 on a visible side 11 of the vehicle trim part 10; 10'; 10" visible from the outside. The exemplary method comprises a first step (Figure 1) of providing an injection mold 100 with a first mold half 110 and a second mold half 120, which are movable relative to one another between an open and a closed position of the injection mold 100, the injection mold 100 forming a cavity 130 between the first mold half 110 and the second mold half 120 in the closed position. According to a second step (Figure 2) plastic elements 150 are provided and arranged on a cavity surface. In a third step (Figure 3) a plastic melt 140 is injected into the cavity 130 where it hardens, for example by passive or active cooling, to form the vehicle trim part 10; 10'; 10" which is finally removed by opening the injection mold 100 (Figure 4). The plastic elements 150 are provided and arranged on the first mold half 110 in such a way that, during injection and/or hardening, the plastic elements 150 connect in a material-locking manner with the injected plastic melt 140 and form a speckle 1 and/or veining pattern 2 on the visible side 11 of the vehicle trim part 10; 10'; 10".

By applying the desired pattern directly to the cavity surface, the corresponding vehicle trim part 10; 10'; 10" can be produced in a particularly cost-efficient manner. At the same time, the use of sustainable and/or recycled materials can be made visible, with the possibility in particular of providing the desired pattern as simply and as precisely as possible. Another advantage is the flexibility of the process. For example, size restrictions on the plastic elements can be circumvented, as they would exist in the case of a plastic melt premixed with plastic elements.

The steps shown in Figures 1, 3 and 4 are generally known. Specific examples of how the plastic elements 150 are provided and arranged according to the second step schematically shown in Figure 2 will be discussed in more detail further below.

The vehicle trim part 10; 10'; 10" can be a vehicle interior trim part or a vehicle exterior trim part. The vehicle trim part 10; 10'; 10" can be a decorative trim or panel part. In the finished vehicle trim part 10; 10'; 10", the plastic elements 150 and the material of the injected plastic melt 140 are joined together as one piece by their material-locking connection.

Figures 5 and 6 show two exemplary vehicle trim parts 10 in a vehicle interior compartment with a speckle and a veining pattern 1; 2, respectively. The respective vehicle trim parts 10 are producible with the methods described herein.

The cavity surface on which the plastic elements 150 are arranged can substantially comprise a surface of the first mold half 111 or a surface of the second mold half 121 facing the vehicle trim part 10 to be produced. According to the method shown in Figures 1 to 4 the plastic elements 150 are arranged on the surface of the first mold half 111 facing substantially in the opposite direction to the visible side 11 of the vehicle trim part 10 to be produced. Accordingly, in the resulting vehicle trim part 10 shown in Figure 4, the plastic elements 150 are arranged on an inner side of the vehicle trim part 10 facing substantially in the opposite direction to the visible side 11. According to a first alternative embodiment of the method, the cavity surface on which the plastic elements 150 are arranged can substantially comprise the surface of the second mold half 121 facing substantially in the same direction as the visible side 11 of the vehicle trim part 10' to be produced. Accordingly, as shown in Figure 7, the plastic elements 150 are arranged on an inner side of the vehicle trim part 10' facing substantially in the same direction as the visible side 11. According to a second alternative embodiment of the method, the cavity surface on which the plastic elements 150 are arranged can substantially comprise the surface of the first mold half 111 facing substantially in the opposite direction to the visible side 11 and the surface of the second mold half 121 facing substantially in the same direction as the visible side 11 of the vehicle trim part 10" to be produced. Accordingly, as shown in Figure 8, the plastic elements 150 are arranged on an inner side of the vehicle trim part 10" facing substantially in the opposite direction to the visible side 11 and on an opposed inner side of the vehicle trim part 10" facing substantially in the same direction as the visible side 11. Advantageously, the latter two embodiments of the vehicle trim part 10', 10" are provided using a transparent or translucent material for the injected plastic melt 140. The plastic elements 150 and the injected plastic melt 140 are arranged substantially directly adjacent, i.e. without any intermediate layer or substance, to the cavity surface. The plastic elements 150 may be provided and arranged on the cavity surface while the injection mold 100 is in its open position.

The plastic elements 150 may form a macroscopic speckle and/or veining pattern 1; 2 on the visible side 11 of the vehicle trim part 10; 10'; 10", e.g. as shown in Figures 5 and 6, which pattern is for example visible to the naked eye within usual distances in a passenger compartment. In this example, usual distances may comprise a distance range between 30 cm and 3 m. In particular, a minimum visible extent of individual geometric elements of the speckle and/or veining pattern 1; 2, for example an average diameter of individual speckle spots or an average line width of individual veining lines, may be on average at least 0.1 mm, at least 0.5 mm or at least 2 mm and on average at most 5 mm, at most 10 mm or at most 15 mm. The pattern may differ, in particular visibly differ, in color from the material of the injected plastic melt 140. The pattern can be single or multicolored. Single pattern elements may be provided by single plastic elements 150 or by multiple adjacent plastic elements 150. A combination of a speckle and a veining pattern 1; 2, or different areas each with a speckle or a veining pattern 1; 2, may be provided on the vehicle trim part 10; 10'; 10".

Injecting the plastic melt 140 may be provided by one (e.g. Figure 3) or more injection channels, which may be arranged in the second mold half 120 (e.g. Figure 3) and/or the first mold half 110. Injection of the plastic melt 140 may be substantially provided along the direction of gravitational acceleration or perpendicular thereto, depending on the arrangement of an injection assembly. Usually, during the step of providing and arranging the plastic particles 150 on the cavity surface, the cavity surface will be arranged substantially horizontal, i.e. in a plane perpendicular to the direction of gravitational acceleration. Therefore, when plastic elements 150 are provided on the first mold half 110 and on the second mold half 120 and/or when injecting the plastic melt 140 is provided in a direction perpendicular to the direction of gravitational acceleration, the method may include the step of rotating the first mold half 110 and/or the second mold half 120 and/or the cavity 130 at least before injecting the plastic melt 140. Hardening of the injected plastic melt 140 may be provided by passive or active cooling of the first and second mold half 110, 120, in particular at the two mold half surfaces 111, 121 facing the vehicle trim part to be produced, depending on the material of injected plastic melt 140.

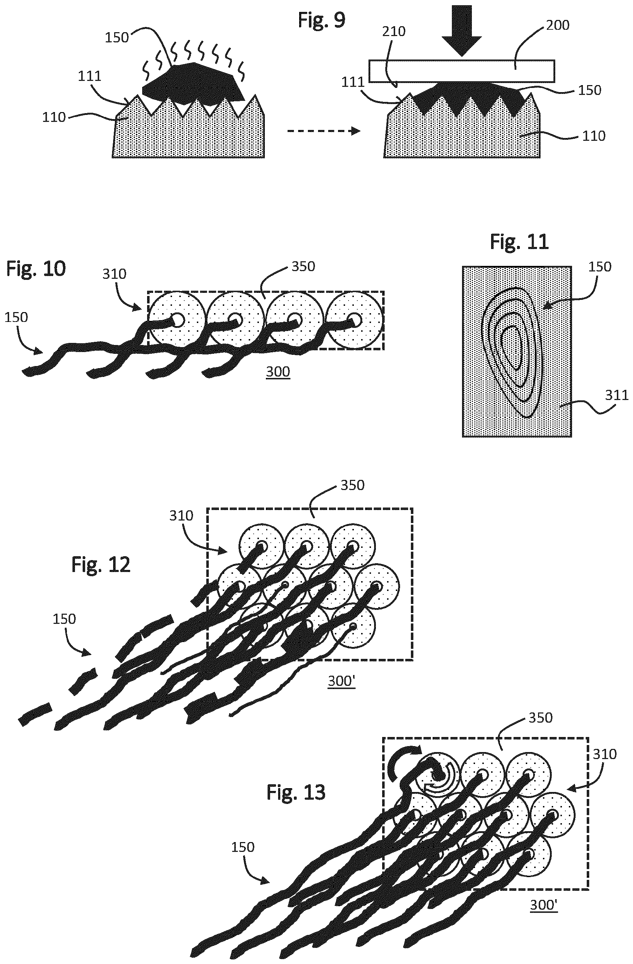

According to an optional step of the method and shown in Figure 9, the plastic elements 150 arranged on the first cavity surface may be heated (schematically indicated by curved lines in Figure 9) and pressed against the cavity surface by means of a pressing device 200 (see Figure 9, in which pressing is schematically indicated by an arrow), in particular a hot-pressing device, before injecting the plastic melt 140 into the cavity 130. In the example of Figure 9, the respective plastic particle 150 is arranged on a surface 111 of the first mold half 110. Alternatively, the plastic elements 150 may be only heated or pressed against the cavity surface. Heating of the plastic elements 150 may be provided by directly heating the plastic elements 150 and/or by heating the cavity surface and/or the mold cavity 130, for example by hot air blowing, thermal resistance heating, induction heating or UV lamp heating. Heating, in particular heating of the cavity surface, may be provided before, during and/or after providing and arranging the plastic elements 150 on the cavity surface. According to the example shown in Figure 9 the pressing device 200 is provided with a non-stick coating 210 on its side which faces the first mold half 110 during pressing. The coating 210 is preventing sticking of the plastic elements 150 to the pressing device 200. Heating and/or pressing of the plastic elements 150 may result in a deformation of the plastic elements 150 in such a way that their resulting extension depth into the vehicle trim part 10; 10'; 10" measured along a surface normal of the vehicle trim part 10 is 100 %, not more than 80 %, not more than 50 % or not more than 30 % thereby adjusting the size of the plastic elements 150 to the aesthetical and structural requirements of the final product. The deformation can result in a decrease in the extension of the plastic elements 150 along the surface normal to as low as 80 %, 50 % or 30 % of their initial size. Additionally or alternatively, pressing of the plastic elements 150 may provide a homogeneous and in particular a flat surface of the plastic elements 150 facing towards the pressing device 200. Additionally or alternatively, heating and/or pressing of the plastic elements 150 may result in enhanced connection or sticking of the plastic elements 150 to the cavity surface, in particular during the injecting of the plastic melt 140 into the cavity 130 and/or the hardening of the injected plastic melt 140. This can allow better control of the desired pattern and might in particular be useful, when the first mold half 110 and/or the second mold half 120 has to be rotated from a substantially horizontal to a substantially vertical position before injecting the plastic melt 140. Additionally or alternatively, heating and/or pressing of the plastic elements 150 may provide deformation and/or at least partial overlapping and/or blending of adjacent pattern elements. This can allow to create particular design effects, e.g. when multicolored pattern designs are used. Additionally or alternatively, heating and/or pressing may provide connection, in particular in a material-locking manner, of adjacent plastic elements 150. For heating and/or pressing of the plastic elements 150 the plastic elements 150 and/or the cavity surface and/or the pressing device 200 may be brought to a temperature of at least 60 °C, at least 100 °C, at least 140 °C or at least 150 °C, in particular depending on the glass-transition or melting temperature of the plastic elements.

The plastic elements 150 may comprise or consist of a thermoplastic, in particular a recycled thermoplastic, e.g. for improved sustainability. For example, the plastic elements 150 may comprise or consist of polypropylene or recycled polypropylene, thereby in particular providing improved sustainability and CO₂ reduction in order to minimize the global footprint. Alternatively or additionally, the plastic elements 150 may comprise or consist of polylactic acid and/or recycled polylactic acid, but also polyethylene terephthalate, acrylonitrile butadiene styrene, acrylonitrile styrene acrylate and/or their recycled counterparts. The entirety of the plastic elements 150 and/or single plastic elements 150 may be single, bi- or multicolored to provide the desired design, whereby pearlescent or glossy element surfaces may be provided as well. The injected plastic melt 140 may comprise or consist of a thermoplastic or a recycled thermoplastic, e.g. for improved sustainability. The injected plastic melt 140 may comprise or consist of polypropylene, poly(methyl methacrylate), polycarbonate, polystyrene and/or acrylonitrile butadiene styrene. The injected plastic melt 140 may at least partially consist of a transparent or translucent material. In particular, the material of the plastic elements 150 and the material of the injected plastic melt 140 should be selected to be compatible with each other so that a material bond is formed between the plastic elements 150 and the injected plastic melt during injection and/or hardening.

The plastic elements 150 and/or the injected plastic melt 140 can consist of a mono-material. Furthermore, additives, in particular binding agents, may be added to or contained in the plastic elements 150 and/or the injected plastic melt 140, so that a connection between individual plastic elements 150 and/or between the plastic elements 150 and the injected plastic melt 140 is enhanced. Besides, the additives may also enhance adhesion between the plastic elements 150 and the cavity surface.

The plastic elements 150 may comprise or consist of solid plastic particles, plastic pellets, plastic powder, plastic filaments and the like. The plastic elements 150 may comprise a pre-formed design pattern. Depending on the step of providing and arranging the plastic elements 150 on the cavity surface, a raw plastic material may be used comprising or consisting of solid plastic particles, plastic pellets, plastic powder, plastic filaments and the like, in addition to molten plastic. Providing and arranging the plastic elements 150 on the cavity surface may include manual or machine application, for example by means of a dispensing device, spraying, sieving, filtering, brushing, stamping, and in particular pellets extrusion or fused filament fabrication. Along the surface normal of the first cavity surface facing the vehicle trim part 10; 10'; 10" to be produced, the plastic elements 150 can be arranged essentially in a single layer or at least partially stacked on top of each other. The plastic elements 150 and/or the plastic raw material can be substantially flat or expanded in all three spatial directions. Depending on the process, the desired pattern, for example with regard to the distribution and arrangement of the individual pattern elements, may be partially randomized, but at least predetermined with respect to the mean extent and density of the plastic elements 150 visible on the visible side of the vehicle trim part 10; 10'; 10" to be produced. Alternatively, the desired pattern may be as well predetermined with respect to the distribution and arrangement of the individual pattern elements.

As described herein, the elements provided and arranged on the cavity surface are plastic elements 150 at least partially made of plastic. Additionally or alternatively those elements may comprise or consist of other materials, e.g. metal and/or wood. In particular material mixes or composite materials comprising plastic and metal or wood can be used for the plastic elements 150.

The respective elements can alternatively connect in a positive-locking manner with the injected plastic melt, in particular if the respective elements are porous elements.

The plastic elements 150 may be provided and arranged on the first mold half 110 by at least one nozzle, in particular by means of pellets extrusion, for example using a hot-runner, or fused filament fabrication of raw plastic material. In case of pellets extrusion the raw plastic material may be plastic pellets and in case of fused filament fabrication the raw plastic material may be a plastic filament. In case of pellets extrusion using a hot-runner, a pipe conveying molten raw plastic material to the nozzle and/or the nozzle may comprise a thermally insulating coating in order to maintain a desired temperature of the raw material plastic melt. The coating may be provided on pipe and/or nozzle surfaces in contact with the raw material plastic melt. For arrangement of the plastic elements 150 using at least one nozzle, the at least one nozzle can be moved along the cavity surface. Alternatively or additionally, however, the cavity surface can also be moved relative to the at least one nozzle. In order to provide different shapes of single pattern elements, differently shaped nozzle cross-sections may be used.

A process carried out by means of a nozzle for printing desired patterns has the advantage that it is particularly precise. At the same time, however, it can be very time-consuming, especially if only one nozzle or nozzle shape is to be used to provide differently shaped and/or multicolored speckle elements of a speckle pattern 1 or line elements of a veining pattern 2.

According to one embodiment of the method, in which the plastic elements 150 are provided and arranged by means of at least one nozzle, multiple plastic elements 150 may be provided and arranged simultaneously on the cavity surface by using a plurality of nozzles arranged adjacent to each other. This may be particularly suited for creating a veining pattern 2. The nozzles can be arranged essentially in a plane, in particular in a plane parallel to the cavity surface. The nozzles can be arranged such that their main axes are essentially parallel. Depending on the pattern, the nozzles can be arranged essentially linearly or in a package that is as compact as possible in all directions. Depending on the pattern, the nozzles can be individually or jointly moved along the side of the cavity surface and/or rotated about a main nozzle axis and/or fed with the raw plastic material and/or provided with different nozzle cross-sections, thereby providing, for example, different line distances of individual adjacent lines, waved lines, dashed lines and different line colors or different line shapes, respectively.

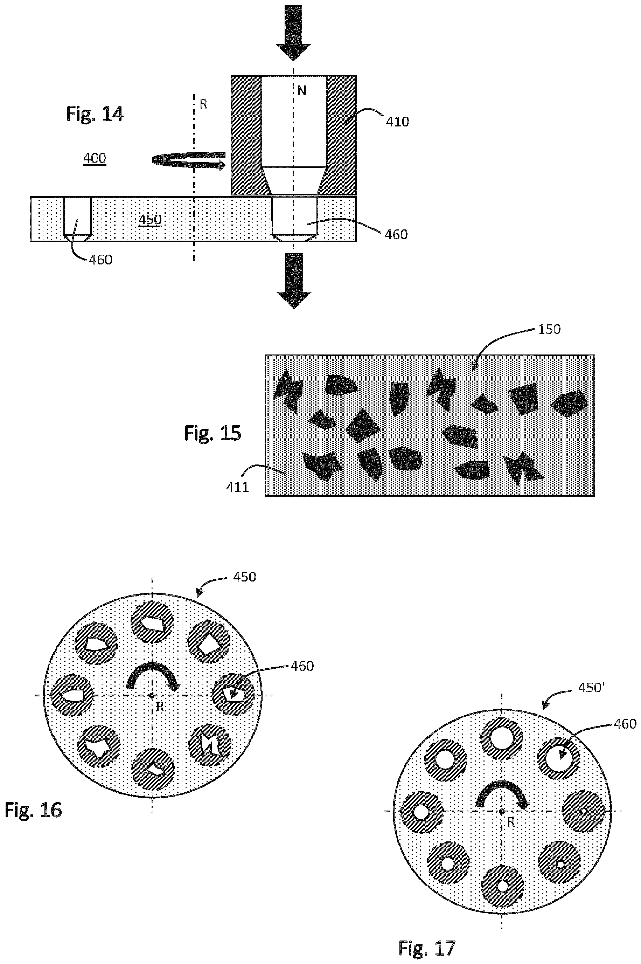

According to one alternative embodiment of the method, in which the plastic elements 150 are provided and arranged by means of at least one nozzle, a cartridge with differently shaped through holes may be provided and arranged between the nozzle and the cavity surface. The through holes may be selectively brought into alignment with the nozzle along the main nozzle axis in such a way that plastic elements 150 of different shapes are provided and arranged on cavity surface in accordance with the through holes. This may be particularly suited for creating a speckle pattern 1 with numerous differently shaped speckles of a predetermined shape, as shown in Figure 15 for example.

As an alternative to using the at least one nozzle to directly provide and arrange the plastic elements on the cavity surface, a pattern of plastic elements 150 may be pre-formed by the at least one nozzle on any working surface and then transferred to the cavity surface.

In the following, two embodiments each of a device 300; 300' for simultaneously printing multiple lines on a flat or curved surface 311 to form a veining pattern 2 and a device 400 for printing multiple different shapes on a flat or curved surface 411 to form a speckle pattern 1 are described. These are particularly suitable for carrying out step 2 of the process described above by way of example. In particular, the devices 300; 300'; 400 may be used to provide and arrange plastic elements 150 directly on the cavity surface.

According to Figures 10, 12 and 13, two embodiments of a device 300; 300' for simultaneously printing multiple lines on a flat or curved surface 311 to form a veining pattern 2 are shown from the perspective of the surface 311 to be printed. The device 300; 300' comprises a plurality of nozzles 310 configured to provide and arrange plastic elements 150 on the surface 311. The nozzles 310 are arranged adjacent to one another. The nozzles 310 are individually or jointly movable along the surface 311 and/or rotatable about a main nozzle axis and/or feedable with the raw plastic material and/or provided with different nozzle cross-sections. For example, as shown in Figures 12 and 13, individual feeding of the nozzles 310 may provide dashed lines, different nozzle cross-sections may provide different line thicknesses and rotation of individual nozzles 310 (indicated by a white arrow in Figure 13) may provide waved lines (indicated by the respective black arrow). Also, the nozzles 310 may be individually movable along the surface 311. The nozzles 310 may be configured for printing by means of pellets extrusion, e.g. by a hot-runner, or fused filament fabrication of raw plastic material. The nozzles 310 are arranged in a common movable printing head 350 for feeding and controlling the nozzles 310. The arrangement of several nozzles 310 in one printing head 350 enables a particularly compact nozzle 310 arrangement in which adjacent lines can be printed simultaneously and closer together. The printing head 350 is movable in all six degrees of freedom. The nozzles 310 can be movably arranged in the printing head 350 in such a way that a movement of the printing head 350 results in a global movement of all nozzles 310 and the movement of individual nozzles 310 results in their movement relative to each other. The nozzles 310 are essentially arranged in a plane parallel to the surface 311. The nozzles 310 are arranged such that their main nozzle axes are essentially parallel. The nozzles 310 can be arranged essentially linearly, as shown in Figure 10, or in a package that is as compact as possible in all directions, as shown in Figures 12 and 13. A shortest distance between two adjacent nozzles 310, in particular perpendicular to the main nozzle axis, may not be greater than 0 mm, 0.1 mm, 1 mm or 10 mm. As presently shown, the nozzles 310 are arranged directly adjacent to each other.

An exemplary arrangement of plastic elements 150 forming a veining pattern printed on a surface 311 is shown in Figure 11. This pattern may be achieved via the device 300 shown in Figure 10 by simultaneously moving and rotating the printing head 350 of the device 300 along the surface 311, for example.

In Figure 14, an embodiment of a device 400 for printing multiple different shapes on a flat or curved surface 411 to form a speckle pattern 1 is shown along a plane of a main nozzle axis N. The device 400 comprises a nozzle 410 configured to provide and arrange plastic elements 150 on the surface 411, in particular by means of pellets extrusion or fuse filament fabrication of raw plastic material, and comprises a cartridge 450 with differently shaped through holes 460 arranged between the nozzle 410 and the surface 411. Intake and discharge of raw plastic material by the device 400 are schematically indicated by straight black arrows. Exemplary cartridges 450; 450' are shown in Figures 16 and 17 in a plane along the main nozzle axis N. The through holes 460 are selectively alignable with the nozzle 410 along the main nozzle axis N. As the device 400 includes a cartridge 450; 450' arranged between the nozzle 410 and the surface 411, wherein differently shaped through holes 460 are alignable with the main nozzle axis N to print different shapes, predetermined and more complex speckle pattern 1 are printable in less time. The through holes 460 are distributed radially around an axis of rotation R of the cartridge 450; 450', wherein the cartridge 450; 450' is rotatably mounted about the axis of rotation R for alignment of the through holes 460 with the main nozzle axis N. Rotation of the cartridges 450; 450' around the axis of rotation R is schematically indicated by curved black arrows. The axis of rotation R of the cartridge 450; 450' and the main nozzle axis N extend parallel and spaced apart from each other. The shapes of the through holes 460 are defined by a cross-section of the through holes 460 substantially perpendicular to the axis of rotation R and substantially perpendicular to the main nozzle axis N. The different shapes of the through holes 460 may be substantially circular and/or angular as shown in Figures 17 and 16, respectively. The cross-section of at least one or all the through holes 460 at an end of the trough hole 460 facing the nozzle 410 may have a largest diameter substantially equal to and/or smaller than a largest diameter of the nozzle cross-section at a nozzle end facing the cartridge 450; 450', as shown in Figure 14. The cross-section of at least one or all the through holes 460 may be tapered towards an end of the through-hole 460 facing away from the nozzle 410, as shown in Figure 14. The cartridge 450; 450' is arranged directly adjacent to the nozzle 410. A minimum distance between the cartridge 450; 450' and the nozzle 410, the distance being measured along the main nozzle axis N, may not exceed 0 mm, 0.1 mm or 0.5 mm. The exemplary cartridges 450; 450' shown in Figures 14, 16 and 17 are formed as a substantially flat disc, wherein the axis of rotation R corresponds to the principal axis of inertia, which runs along the surface normal of the disk base surface. In Figures 16 and 17, potential nozzle areas in which the nozzle 410 is alignable with the through holes 460 are designated as shaded circular sections.

An exemplary arrangement of plastic elements 150 to form a speckle pattern printed on a surface 411 is shown in Figure 15. This pattern may be achieved via the device 400 shown in Figure 14 using the cartridge 450 shown in Figure 16.

Figures 5 and 6 show two exemplary vehicle trim parts 10 in a vehicle interior compartment with a speckle and a veining pattern 1; 2, respectively. The vehicle trim part 10 has a visible side visible from the outside and comprises plastic elements 150 which are arranged in an injection-molded plastic and are connected to the latter in a material-locking manner in such a way that a visible speckled and/or veining pattern 1; 2 is formed on the visible side. In particular, both exemplary vehicle trim parts 10 may be vehicle trim parts 10 producible or produced by a method and/or using a device 300; 300'; 400 as described above. The exemplary vehicle trim parts 10 shown in Figures 5 and 6 are vehicle interior trim parts. In particular, they are decorative parts of a door panel and a front console. Alternatively, the vehicle trim part may be a vehicle exterior trim part, a part of a center console or a roof panel or the like. The vehicle trim part may be a trim part with a substantially flat or curved visible side.

The plastic elements 150 may comprise or consist of a thermoplastic, in particular a recycled thermoplastic. For example, the plastic elements 150 may comprise or consist of polypropylene or recycled polypropylene. Alternatively or additionally, the plastic elements 150 may comprise or consist of polylactic acid and/or recycled polylactic acid, but also polyethylene terephthalate, acrylonitrile butadiene styrene, acrylonitrile styrene acrylate and/or their recycled counterparts. The plastic elements 150 can consist of a mono-material. The entirety of the plastic elements 150 and/or single plastic elements 150 may be single, bi- or multicolored, whereby pearlescent or glossy element surfaces may be provided as well. The injection-molded plastic may comprise or consist of a thermoplastic or a recycled thermoplastic. The injection-molded plastic may comprise or consist of polypropylene, poly(methyl methacrylate), polycarbonate, polystyrene and/or acrylonitrile butadiene styrene. The injection-molded plastic can consist of a mono-material. The injection molded plastic may at least partially consist of a transparent or translucent material.

An extension depth of the plastic elements 150 into the vehicle trim part measured along a surface normal of the vehicle trim part may be 100 %, not more than 80 %, not more than 50 % or not more than 30 %. In addition or alternatively, the extension depth may be not less than 1 %, not less than 5 %, not less than 10 % or not less than 20 %. An average extension depth of the plastic elements 150 may be 30 %.

## Claims

1. A method for producing a vehicle trim part (10; 10'; 10") having a visible speckle and/or veining pattern (1; 2) on a visible side (11) of the vehicle trim part (10; 10'; 10") visible from the outside, the method comprising the steps of:
Providing an injection mold (100) with a first mold half (110) and a second mold half (120), which are movable relative to one another between an open and a closed position of the injection mold (100), the injection mold (100) forming a cavity (130) between the first and the second mold half (110; 120) in the closed position;
Injecting a plastic melt (140) into the cavity (130);
Hardening of the injected plastic melt (140) to form the vehicle trim part (10);
Removing the vehicle trim part (10; 10'; 10") by opening the injection mold (100);
wherein before the injecting of the plastic melt (140) into the cavity (130)
plastic elements (150) are provided and arranged on a cavity surface in such a way that, during injection and/or hardening, the plastic elements (150) connect in a material-locking manner with the injected plastic melt (140) and form a speckle and/or veining pattern (1; 2) on the visible side (11) of the vehicle trim part (10; 10'; 10").

2. Method according to claim 1, wherein the cavity surface on which the plastic elements (150) are arranged substantially comprises a surface of the first mold half (111) and/or a surface of the second mold half (121) facing the vehicle trim part (10; 10'; 10") to be produced.

3. The method according to claim 1 or 2, wherein the plastic elements (150) and the injected plastic melt (140) are substantially arranged directly adjacent to the cavity surface.

4. The method according to any one of the preceding claims, wherein the plastic elements (150) form a macroscopic speckle and/or veining pattern (1; 2) on the visible side (11) of the vehicle trim part (10; 10'; 10"), wherein in particular a minimum visible extent of individual geometric elements of the speckle and/or veining pattern (1; 2) is on average at least 0.1 mm, at least 0.5 mm or at least 2 mm and on average at most 5 mm, at most 10 mm or at most 15 mm.

5. The method according to any one of the preceding claims, wherein, before injecting the plastic melt (140) into the cavity (130), the plastic elements (150) arranged on the cavity surface are heated and/or pressed against the cavity surface by means of a pressing device (200), wherein the plastic elements (150) are deformed in such a way that their resulting extension depth into the vehicle trim part (10; 10'; 10") measured along a surface normal of the vehicle trim part (10; 10'; 10") is 100 %, not more than 80 %, not more than 50 % or not more than 30 %, and wherein optionally the plastic elements (150) and/or the cavity surface and/or the pressing device (200) are brought to a temperature of at least 60 °C, at least 100 °C, at least 140 °C or at least 150 °C.

6. The method according to any one of the preceding claims, wherein the plastic elements (150) are provided and arranged on the cavity surface by at least one nozzle (310; 410), in particular by means of pellets extrusion or fused filament fabrication of raw plastic material, wherein the nozzle (310; 410) is moved along the cavity surface.

7. The method according to claim 6, in particular for forming the veining pattern (2) on the visible side (11) of the vehicle trim part (10; 10'; 10"), wherein multiple plastic elements (150) are provided and arranged simultaneously on the cavity surface by a plurality of nozzles (310) arranged adjacent to each other, wherein, depending on the pattern, the nozzles (310) are individually or jointly moved along the cavity surface and/or rotated about a main nozzle axis and/or fed with the raw plastic material and/or provided with different nozzle cross-sections.

8. The method according to claim 6, in particular for forming the speckle pattern (1) on the visible side (11) of the vehicle trim part (10; 10'; 10"), wherein a cartridge (450; 450') with differently shaped through holes (460) is provided and arranged between the nozzle (410) and the cavity surface, and wherein the through holes (460) are selectively brought into alignment with the nozzle (410) along a main nozzle axis (N) in such a way that plastic elements (150) of different shapes are provided and arranged on the cavity surface in accordance with the through holes (460).

9. A vehicle trim part (10; 10'; 10") with a visible speckle and/or veining pattern (1; 2), the vehicle interior trim part (10; 10'; 10") having a visible side (11) visible from the outside and comprising plastic elements (150) which are arranged in an injection-molded plastic and are connected to the latter in a material-locking manner in such a way that a visible speckled and/or veining pattern (1; 2) is formed on the visible side (11), wherein optionally the vehicle trim part (10; 10'; 10") has been produced by a method according to any one of the preceding claims.

10. The vehicle trim part (10; 10'; 10") of claim 9, wherein the plastic elements (150) comprise or consist of a thermoplastic polymer, in particular polypropylene and/or recycled polypropylene and/or polylactic acid and/or recycled polylactic acid, and/or wherein the injection-molded plastic comprises or consists of polypropylene, poly(methyl methacrylate), polycarbonate, polystyrene and/or acrylonitrile butadiene styrene.

11. The vehicle trim part (10; 10'; 10") of claim 9 or 10, wherein an extension depth of the plastic elements (150) into the vehicle trim part (10; 10'; 10") measured along a surface normal of the vehicle trim part is 100 %, not more than 80 %, not more than 50 % or not more than 30%.

12. A device (300; 300') for simultaneously printing multiple lines on a flat or curved surface (311) to form a veining pattern (2), the device comprising a plurality of nozzles (310) configured to provide and arrange plastic elements (150) on the surface (311), in particular by means of pellets extrusion or fused filament fabrication of raw plastic material, wherein
the nozzles (310) are arranged adjacent to one another and individually or jointly movable along the surface (311) and/or rotatable about a main nozzle axis and/or feedable with the raw plastic material and/or provided with different nozzle cross-sections.

13. The device (300; 300') according to claim 12, wherein the nozzles (310) are arranged in a common movable printing head (350) for feeding and controlling the nozzles (310) and wherein optionally a shortest distance between two adjacent nozzles (310) is not greater than 0 mm, 0.1 mm, 1 mm or 10 mm.

14. A device (400) for printing multiple different shapes on a flat or curved surface (411) to form a speckle pattern (1), the device (400) comprising a nozzle (410) configured to provide and arrange plastic elements (150) on the surface (411), in particular by means of pellets extrusion or fused filament fabrication of raw plastic material, wherein
the device (400) comprises a cartridge (450; 450') with differently shaped through holes (460) arranged between the nozzle (410) and the surface (411), and wherein the through holes (460) are selectively alignable with the nozzle (410) along a main nozzle axis (N).

15. The device (400) according to claim 14, wherein the through holes (460) are distributed radially around an axis of rotation (R) of the cartridge (450; 450') and wherein the cartridge (450; 450') is rotatably mounted about the axis of rotation (R) for alignment of the through holes (460) with the main nozzle axis (N), the axis of rotation (R) of the cartridge (450; 450') and the main nozzle axis (N) being optionally parallel and spaced apart from each other.
